Europäisches Patentamt

European Patent Office

Office européen des brevets

(19)

(11) **EP 1 083 033 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.⁷: **B29B 13/06**, F26B 21/12

(21) Anmeldenummer: **99117760.1**

(22) Anmeldetag: **09.09.1999**

(54) **Verfahren und Vorrichtung zum Trocknen von Granulat**

Process and device for drying granules

Procédé et dispositif pour sécher des granulés

(84) Benannte Vertragsstaaten:
**AT BE CH CY DE DK ES FI FR GB GR IE IT LI LU MC NL PT SE**

(43) Veröffentlichungstag der Anmeldung:
**14.03.2001 Patentblatt 2001/11**

(73) Patentinhaber:
• **Siekmann, Ernst-August**
**32049 Herford (DE)**
• **Wickel, Otto-Wilhelm**
**33611 Bielefeld (DE)**

(72) Erfinder:
• **Siekmann, Ernst-August**
**32049 Herford (DE)**
• **Wickel, Otto-Wilhelm**
**33611 Bielefeld (DE)**

(74) Vertreter: **Wiebusch, Manfred**
**TER MEER STEINMEISTER & PARTNER GbR,**
**Patentanwälte,**
**Artur-Ladebeck-Strasse 51**
**33617 Bielefeld (DE)**

(56) Entgegenhaltungen:
DE-A- 4 234 696          DE-A- 19 848 140
DE-U- 29 621 313         FR-A- 2 663 259
US-A- 5 094 011

• "SECHAGE" REVUE GENERALE DES CAOUTCHOUCS ET PLASTIQUES,FR,SOCIETE D'EXPANSION TECHNIQUE ET ECONOMIQUE. PARIS, Bd. 67, Nr. 699, 1. Oktober 1990 (1990-10-01), Seiten 100-111, XP000287441 ISSN: 1154-1105
• "ENERGIE- UND KOSTEN-SPARENDES TROCKNERSYSTEM FUR KUNSTSTOFFGRANULATE" PLASTVERARBEITER,DE,ZECHNER UND HUETHIG VERLAG GMBH. SPEYER/RHEIN, Bd. 46, Nr. 5, 1. Mai 1995 (1995-05-01), Seiten 81-83, XP000504741 ISSN: 0032-1338

## Beschreibung

Die Erfindung betrifft ein Verfahren zum Trocknen von Granulat, bei dem man ein gasförmiges Trocknungsmedium durch das in einem Trocknungsbehälter enthaltene Granulat strömen läßt, sowie eine Vorrichtung zur Durchführung dieses Verfahrens.

Bei der Herstellung von Kunststoffteilen im Spritzgieß-, Extrusions- oder Blasverfahren ist die Restfeuchte des als Rohstoff verwendeten Kunststoffgranulats ein wichtiger Parameter, der die Qualität der hergestellten Produkte beeinflußt. Das Granulat wird deshalb unmittelbar vor dem Plastifizieren getrocknet, damit die Restfeuchte unter einen vom Hersteller des Granulats vorgegebenen Grenzwert gesenkt wird. Die Trocknung erfolgt typischerweise in einem kontinuierlichen Verfahren, bei dem das Granulat einen trichterförmigen Trocknungsbehälter durchläuft, in den von unten getrocknete und ggf. erhitzte Luft als Trocknungsmedium eingeblasen wird. Die optimalen Trocknungsparameter, insbesondere die Trocknungstemperatur im Granulat, der Taupunkt der Trocknungsluft, die spezifische Trocknungsluftmenge (gemessen in Kubikmeter Luft pro Kilogramm Granulat) und die Trocknungszeit sind materialabhängig und werden jeweils vom Rohstoffhersteller vorgegeben. Bei Beachtung dieser vorgegebenen Parameter wird in der Regel die vorgeschriebene Restfeuchte erreicht oder unterschritten.

In DE-U-296 21 313 wird ein Trocknungsverfahren der oben genannten Art beschrieben, bei dem der Trocknungsluftdurchsatz auf einen vom Granulatdurchsatz abhängigen Sollwert geregelt wird, so daß die spezifische Trocknungsluftmenge auch dann genau eingehalten werden kann, wenn die Produktionsmenge und damit auch der Granulatdurchsatz durch den Trocknungsbehälter zeitlichen Schwankungen unterliegt.

Mit steigenden Anforderungen an die Qualität der Kunststoffteile steigen auch die Anforderungen an die Genauigkeit, mit der die Restfeuchte des Granulats eingehalten wird. Dabei hat sich gezeigt, daß diese Restfeuchte bei hohen Qualitätsanforderungen nicht nur unterhalb eines oberen Grenzwertes, sondern auch oberhalb eines materialabhängigen unteren Grenzwertes liegen sollte. Mit dem bekannten Verfahren läßt sich zwar durch Verringerung des Trocknungsluftdurchsatzes die spezifische Trocknungsluftmenge an die Produktion anpassen, so daß eine Übertrocknung des Granulats vermieden wird, doch besteht nach wie vor ein Problem darin, daß mit abnehmendem Granulatdurchsatz die Verweildauer des Granulats im Trocknungsbehälter zunimmt und somit die Vorgaben für die Trocknungszeit nicht mehr eingehalten werden können. Da sich die physikalische und chemische Beschaffenheit des Granulats im Verlauf des Trocknungsprozesses ändert, kann eine Zunahme der Trocknungszeit nicht ohne weiteres durch eine entsprechende Verringerung der Trocknungsluftmenge kompensiert werden. Bei Produktionsunterbrechungen oder bei einer zeitweisen Verringerung der Produktion müssen deshalb Qualitätseinbußen befürchtet werden.

Aus DE 42 34 696 A ist ein Verfahren nach dem Oberbegriff des Anspruchs 1 bekannt, bei dem die Einlässe und Auslässe für das Trocknungsmedium am Trocknungsbehälter in Abhängigkeit von der Temperatur des Granulats geöffnet und abgesperrt werden.

US-A-5 094 011 beschreibt eine Trocknungsvorrichtung für Granulat, bei der das Granulat intervallweise mit Druckluft aus dem Trocknungsbehälter ausgetragen wird. Während der Austragintervalle muß die Trocknungsluftzufuhr abgesperrt werden.

Aufgabe der Erfindung ist es, ein Verfahren und eine Vorrichtung zur Trocknung von Granulat anzugeben, mit denen sich die vom Granulathersteller vorgegebenen Trocknungsparameter auch bei schwankendem Granulatdurchsatz genauer einhalten lassen.

Diese Aufgabe wird bei einem Verfahren der eingangs genannten Art dadurch gelöst, daß man das Trocknungsmedium periodisch in Intervallen durch das Granulat strömen läßt und dabei die auf die Periodendauer bezogene relative Dauer der Intervalle in Abhängigkeit vom Granulatdurchsatz einstellt und während der Intervallzwischenräume die Lufteinlässe und Luftauslässe am Trocknungsbehälter absperrt.

Der Erfindung liegt der Gedanke zugrunde, durch Absperren der Lufteinlässe und -auslässe am Trocknungsbehälter während des Trocknungsprozesses den jeweils erreichten Ist-Zustand des Granulats für eine gewisse Zeit zu konservieren. Da während dieser Zeit kein Luftaustausch mit der Umgebung stattfindet, ist der Trocknungsprozeß unterbrochen, so daß die Zeiten, in denen die Lufteinlässe und -auslässe abgesperrt sind, nicht zur Trocknungszeit beitragen. Bei verringertem Granulatdurchsatz läßt sich somit durch Intervalltrocknung, d.h., durch periodische Unterbrechung des Trocknungsprozesses, die spezifische Trockenluftmenge an den Granulatdurchsatz anpassen, ohne daß deshalb die effektive Trocknungszeit überschritten wird. Darüber hinaus wird durch den Intervallbetrieb der Energieverbrauch für die Trocknung beträchtlich reduziert.

Vorteilhafte Ausgestaltungen der Erfindung ergeben sich aus den Unteransprüchen.

Im Fall einer Produktionsunterbrechung wird bevorzugt die Trocknung ebenfalls unterbrochen, so daß auch in diesem Fall die vorgegebene Trocknungszeit nicht überschritten wird.

Der Granulatdurchsatz kann durch Abfrage des Betriebszustands einer Granulatförderanlage oder durch Gravimetrie automatisch erfaßt werden, so daß sich die Dauer der Trocknungsintervalle automatisch an die Produktionsmenge anpassen läßt. Wahlweise kann jedoch der Granulatdurchsatz oder unmittelbar die Dauer der Trocknungsintervalle auch von Hand eingegeben werden.

Die Erfindung ist nicht auf die kontinuierliche Trocknung des Granulats in Trocknungstrichtern beschränkt, sondern ist auch bei chargenweiser Trocknung anwendbar.

Im folgenden wird ein Ausführungsbeispiel der Erfindung anhand der Zeichnung näher erläutert.

Es zeigen:

Fig. 1 eine schematische Darstellung einer erfindungsgemäßen Trocknungsvorrichtung;

Fig. 2 ein Flußdiagramm des Trocknungsverfahrens; und

Fig. 3 ein Zeitdiagramm zur Illustration des zeitlichen Ablaufs eines Trocknungsprozesses

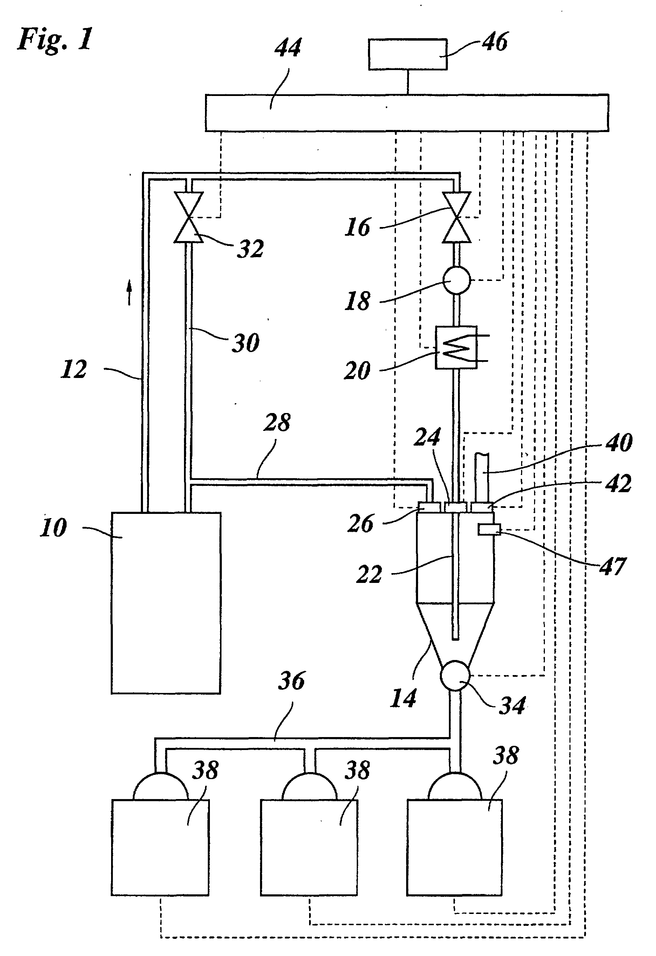

Gemäß Figur 1 ist ein Trocknungsluftgenerator 10 über eine Zuluftleitung 12 mit einem trichterförmigen Trocknungsbehälter 14 für Kunststoffgranulat verbunden. In der Zuluftleitung sind ein Drosselventil 16, ein Durchflußmesser 18 und eine Heizeinrichtung 20 sowie unmittelbar am Lufteinlaß 22 des Trocknungsbehälters ein Sperrventil 24 angeordnet. Ein weiteres Sperrventil 26 bildet einen absperrbaren Luftauslaß an der Oberseite des Trocknungsbehälters. Von diesem Luftauslaß führt eine Abluftleitung 28 zurück zum Trocknungsluftgenerator 10.

Die Zuluftleitung 12 ist mit der Ablaufleitung 28 über eine Bypassleitung 30 verbunden, die ein weiteres Drosselventil 32 enthält.

Ein absperrbarer Granulatauslaß 34 des Trocknungsbehälters 14 ist über ein Granulatfördersystem 36 mit drei Verbrauchern 38 verbunden, bei denen es sich beispielsweise um Spritzgießmaschinen handelt.

An den Trocknungsbehälter 14 ist eine Granulatzuführung 40 angeschlossen, die unmittelbar am Trocknungsbehälter durch einen Sperrschieber 42 absperrbar ist.

Die Verbraucher 38 und die verschiedenen Komponenten der oben beschriebenen Trocknungsanlage sind über in Figur 1 gestrichelt eingezeichnete Signalleitungen mit einer zentralen Steuereinheit 44 verbunden, die über eine Bedienungskonsole 46 bedienbar ist.

Der Trocknungsluftgenerator 10, die Zuluftleitung 12, der Trocknungsbehälter 14 und die Abluftleitung 28 bilden einen geschlossenen Kreislauf, in dem die Trocknungsluft mit Hilfe eines nicht gezeigten Umwälzsystems kontinuierlich umgewälzt wird. Im Trocknungsluftgenerator 10 wird die mit Feuchtigkeit beladene Abluft regeneriert, so daß der Taupunkt der Trocknungsluft in der Zuluftleitung 12 auf einem vorgegebenen Sollwert gehalten wird. Die Steuereinheit 44 erfaßt anhand der Betriebszustände der Verbraucher 38 und/oder Granulatfördersystems 36 den Granulatdurchsatz durch den Trocknungsbehälter 14 und regelt durch Ansteuerung der Drosselventile 16 und 32 den Trocknungsluftdurchsatz durch den Trocknungsbehälter 14, so daß die spezifische Trocknungsluftmenge entsprechend den Vorgaben des Rohstoffherstellers an den jeweiligen Granulatdurchsatz angepaßt wird.

Im Fall einer Produktionsunterbrechung bei allen drei Verbrauchern 38 werden der Sperrschieber 42 am Granulatzulauf 40 und der Granulatauslaß 34 geschlossen. Ebenso werden die Sperrventile 24 und 26 geschlossen, so daß praktisch kein Luftaustausch zwischen dem Granulat im Trocknungsbehälter 14 und der Umgebung mehr stattfindet. Die Wände des Trocknungsbehälters 14 sind wärmeisoliert, so daß die Temperatur des Granulats über einen relativ langen Zeitraum im wesentlichen gehalten werden kann. Auf diese Weise wird der Zustand des Granulats im Trocknungsbehälter 14 konserviert und somit der Trocknungsprozeß unterbrochen, so daß die effektive Trocknungszeit den vom Rohstoffhersteller vorgegebenen Wert nicht überschreitet, obgleich sich durch die Produktionsunterbrechung die Verweildauer des Granulats im Trocknungsbehälter verlängert. Die Temperatur des Granulats wird mit Hilfe eines Temperatursensors 47 erfaßt. Falls bei einer sehr langen Produktionsunterbrechung die Temperatur unter den zulässigen Wert abzusinken droht, kann die Trocknungsluftzufuhr von Zeit zu Zeit jeweils für ein kurzes Intervall wieder eingeschaltet werden, um die Temperatur des Granulats zu halten.

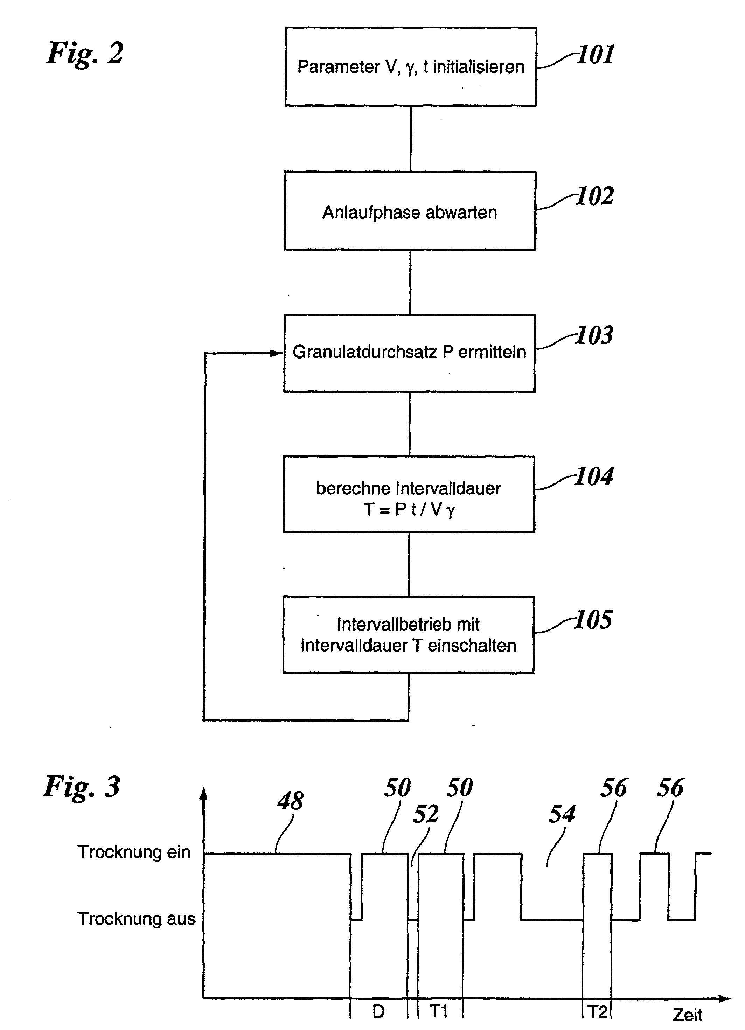

Das Volumen des Trocknungsbehälters 14 ist so ausgelegt, daß die Verweilzeit des Granulats im Trocknungsbehälter der vorgegebenen Trocknungszeit entspricht, wenn alle drei Verbraucher 38 voll ausgelastet sind. Bei verringerter Produktion, beispielsweise bei einer Produktionsunterbrechung in einem der drei Verbraucher, schaltet die Steuereinheit 44 auf Intervallbetrieb. In diesem Fall werden die Sperrventile 24, 26 und ggf. auch der Sperrschieber 42 periodisch geöffnet und geschlossen, so daß die Trocknungszeit in einzelne Intervalle aufgeteilt wird und der Zustand des Granulats in den Zwischenräumen zwischen diesen Intervallen konserviert wird. Diese Arbeitsweise wird nachstehend anhand der Figuren 2 und 3 näher erläutert.

Am Beginn des Trocknungsbetriebes werden in einem Initialisierungsschritt 101 verschiedene Trocknungsparameter initialisiert. Diese Trocknungsparameter umfassen das Volumen V des Trocknungsbehälters 14, die Schüttdichte γ des verarbeiteten Granulats und die vom Granulathersteller vorgegebene Trocknungszeit t. In einer Anlaufphase (Schritt 102) ist die Trocknung kontinuierlich eingeschaltet, damit das Granulat im Trocknungsbehälter 14 rasch die vorgesehene Solltemperatur erreicht. Während dieser Anlaufphase sind die Sperrventile 24 und 26 ständig geöffnet, so daß der Trocknungsbehälter 14 von der mit Hilfe der Heizeinrichtung 20 erhitzten Trocknungsluft durchströmt wird. Die Anlaufphase ist in dem Zeitdiagramm in Figur 3 mit 48 bezeichnet.

In Schritt 103 in Figur 2 wird der Granulatdurchsatz P ermittelt, beispielsweise durch Abfrage der Betriebszustände der Verbraucher 38. Aus dem so ermittelten aktuellen Granulatdurchsatz ergibt sich die Verweildauer τ des Granulats im Trocknungsbehälter:

$$\tau = V\gamma / P.$$

Wenn die Verbraucher 38 nicht voll ausgelastet sind, wird die Verweildauer τ größer sein als die vorgeschriebene Trocknungszeit t. In diesem Fall schaltet die Steuereinheit 44 auf einen Intervallbetrieb, in dem die Sperrventile 24 und 26 periodisch geöffnet und geschlossen werden. Zu diesem Zweck wird in Schritt 104 eine Intervalldauer T berechnet, die gleich dem Quotienten t/τ ist, also:

$$T = P\, t / V\, \gamma$$

Die Intervalldauer T gibt die Dauer der Intervalle, in denen die Sperrventile geöffnet sind, im Verhältnis zu der Periodendauer D eines vollständigen Zyklus aus Öffnen und Schließen der Sperrventile an. In Schritt 105 wird dann der Intervallbetrieb mit der so berechneten Intervalldauer eingeschaltet. Danach erfolgt ein Rücksprung zu Schritt 103, wo der Granulatdurchsatz P erneut ermittelt wird. Die Schritte 103 bis 105 werden dann in einer Schleife fortlaufend wiederholt, so daß die Intervalldauer ständig an den aktuellen Granulatdurchsatz angepaßt wird.

Bei dem in Figur 3 illustrierten Verfahrensablauf folgt auf die Anlaufphase 48 zunächst ein Intervallbetrieb mit einer Intervalldauer T1 von etwa 75%. Man erkennt eine periodische Folge von Intervallen 50, in denen die Trocknung eingeschaltet ist (Sperrventile geöffnet). Diese Intervalle 50 sind durch Intervallzwischenräume 52 voneinander getrennt, in denen die Sperrventile 24, 26 und der Sperrschieber 42 geschlossen sind, so daß der Zustand des Granulats konserviert wird. Die Periodendauer D beträgt in der Praxis beispielsweise 2 Minuten und ist nach Wahl des Benutzers einstellbar. In dem in Figur 3 gezeigten Beispiel folgt auf den Intervallbetrieb eine Produktionsunterbrechung 54. In diesem Fall wird in Schritt 103 der Granulatdurchsatz P = 0 ermittelt, und die Intervalldauer T wird ebenfalls auf 0 eingestellt, d.h., die Sperrventile 24, 26 bleiben permanent geschlossen.

Im gezeigten Beispiel wird angenommen, daß nach der Produktionsunterbrechung 54 die Produktion mit verringertem Granulatdurchsatz wieder aufgenommen wird. Dem entspricht ein erneuter Intervallbetrieb mit Intervallen 56, deren Intervalldauer T2 nur 50% der Periodendauer D beträgt.

Im Rahmen der Patentansprüche sind vielfältige Abwandlungen des oben beschriebenen Ausführungsbeispiels denkbar. Beispielsweise könnte die in Figur 1 gezeigte Anlage mehrere Trocknungsbehälter 14 umfassen, die parallel an den Trocknungsluftgenerator 10 angeschlossen sind. In diesem Fall werden die Trocknungsintervalle für die verschiedenen Trocknungsbehälter unabhängig voneinander anhand des jeweiligen Granulatdurchsatzes bestimmt.

**Patentansprüche**

1. Verfahren zum Trocknen von Granulat, bei dem man ein gasförmiges Trocknungsmedium in Intervallen (50, 56) durch das in einem Trocknungsbehälter (14) enthaltene Granulat strömen läßt und während der Intervallzwischenräume (52) die Einlässe (22, 24) und Auslässe (26) für das Trocknungsmedium am Trocknungsbehälter (14) absperrt, **dadurch gekennzeichnet, daß** man das Trocknungsmedium periodisch durch das Granulat strömen läßt und dabei die auf die Periodendauer (D) bezogene relative Dauer (T) der Intervalle in Abhängigkeit vom Granulatdurchsatz (P) einstellt.

2. Verfahren nach Anspruch 1, **dadurch gekennzeichnet, daß** man bei einer Produktionsunterbrechung (54), bei der der Granulatdurchsatz durch den Trocknungsbehälter (14) vollständig zum Erliegen kommt, die Einlässe (22, 24) und Auslässe (26) am Trocknungsbehälter permanent geschlossen hält.

3. Verfahren nach Anspruch 1 oder 2, **dadurch gekennzeichnet, daß** der Intervallbetrieb erst nach einer Anlaufphase (48) beginnt, in der ununterbrochen getrocknet wird.

4. Verfahren nach einem der vorstehenden Ansprüche, **dadurch gekennzeichnet, daß** man in den Intervallzwischenräumen (52) auch den Granulatzulauf (40) am Trocknungsbehälter (14) luftdicht absperrt.

5. Verfahren nach einem der vorstehenden Ansprüche, **dadurch gekennzeichnet, daß** der Granulatdurchsatz (P) durch den Trocknungsbehälter (14) fortlaufend oder periodisch überwacht wird und die Intervalldauer (T) automatisch an den jeweiligen Granulatdurchsatz angepaßt wird.

6. Vorrichtung zum Trocknen von Granulat, mit einem Trocknungsbehälter (14), der von einem gasförmigen Trocknungsmedium durchströmt wird und bei dem Ein- und Auslässe für das Trocknungsmedium am Trocknungsbehälter (14) mit Sperrventilen (24, 26) absperrbar sind, und mit einer Steuereinheit (44), die den Durchsatz des Trocknungsmediums durch den Trocknungsbehälter (14) intervallweise steuert, indem die Sperrventile (24, 26) periodisch geöffnet und geschlossen werden, **dadurch gekennzeichnet, daß** die Steuereinrichtung (44) den Durchsatz des Trocknungsmediums im Intervallbetrieb steuert, während das Granulat kontinuierlich mit einem bestimmten Durchsatz (P) aus dem Trocknungsbehälter ausgetragen wird.

7. Vorrichtung nach Anspruch 6, **dadurch gekennzeichnet, daß** die Steuereinrichtung (44) dazu ausgbildet ist, die auf die Periodendauer (D) bezogene relative Dauer (T) der Intervalle, in denen das Trocknungsmedium den Trocknungsbehälter durchströmt, in Abhängigkeit vom Granulatdurchsatz (P) einzustellen.

8. Vorrichtung nach Anspruch 6 oder 7, **dadurch gekennzeichnet, daß** ein Granulatzulauf (40) am Trocknungsbehälter (14) mit Hilfe eines Sperrschiebers (42) im wesentlichen luftdicht absperrbar ist.

## Claims

1. Process for drying granules, in which a gaseous drying medium is caused to flow at intervals (50, 56) through the granules contained in a drying container (14) and, during the gaps (52) between intervals, the inlets (22, 24) and outlets (26) for the drying medium at the drying container (14) are closed off, **characterised in that** the drying medium is caused to flow through the granules periodically and, during that operation, the relative duration (T) of the intervals, which is based on the period duration (D), is adjusted in dependence on the granule throughput (P).

2. Process according to claim 1, **characterised in that**, during an interruption in production (54), in which the granule throughput through the drying container (14) comes to a complete standstill, the inlets (22, 24) and outlets (26) at the drying container are kept permanently closed.

3. Process according to claim 1 or 2, **characterised in that** interval operation begins only after a start-up phase (48) during which drying is carried out without interruption.

4. Process according to any one of the preceding claims, **characterised in that** the granule inlet (40) at the drying container (14) is also closed off in an airtight manner in the gaps (52) between intervals.

5. Process according to any one of the preceding claims, **characterised in that** the granule throughput (P) through the drying container (14) is monitored continuously or periodically and the interval duration (T) is automatically adapted to the particular granule throughput concerned.

6. Device for drying granules, having a drying container (14) through which a gaseous drying medium flows and in the case of which inlets and outlets for the drying medium at the drying container (14) can be closed off with shut-off valves (24, 26), and having a control unit (44) which controls the throughput of the drying medium through the drying container (14) in interval manner by opening and closing the shut-off valves (24, 26) periodically, **characterised in that** the control device (44) controls the throughput of the drying medium in interval operation while the granules are discharged from the drying container continuously at a specific throughput (P).

7. Device according to claim 6, **characterised in that** the control device (44) is constructed for the purpose of adjusting the relative duration (T), which is based on the period duration (D), of the intervals in which the drying medium flows through the drying container, in dependence on the granule throughput (P).

8. Device according to claim 6 or 7, **characterised in that** a granule inlet (40) at the drying container (14) can be closed off in a substantially airtight manner using a blocking slide (42).

## Revendications

1. Procédé de séchage de granulat, dans lequel on fait circuler un fluide gazeux de séchage à intervalles (50, 56), à travers le granulat contenu dans un récipient de séchage (14), et pendant les pauses (52) entre les intervalles, les entrées (22, 24) et les sorties (26) pour le fluide de séchage sont fermées sur le récipient de séchage (14), **caractérisé en ce qu'**on fait circuler périodiquement le fluide de séchage à travers le granulat et la durée relative (T) des intervalles, rapportée à la durée de période (D), est réglée en fonction du débit du granulat (P).

2. Procédé selon la revendication 1, **caractérisé en ce qu'**au cours d'une interruption de production (54), pendant laquelle le débit de granulat à travers le récipient de séchage (14) est totalement suspendu, les entrées (22, 24) et les sorties (26) du récipient de séchage sont maintenues fermées en permanence.

3. Procédé selon la revendication 1 ou 2, **caractérisé en ce que** le mode de fonctionnement à intervalles ne commence qu'après une phase de démarrage (48) au cours de laquelle on sèche de manière ininterrompue.

4. Procédé selon l'une des revendications précédentes, **caractérisé en ce que** pendant les pauses (52) entre intervalles, on ferme aussi de manière étanche à l'air l'arrivée de granulat (40) du récipient de séchage (14).

5. Procédé selon l'une des revendications précédentes, **caractérisé en ce que** le débit de granulat (P) à travers le récipient de séchage (14) est surveillé en continu ou périodiquement, et la durée d'intervalle (T) est adaptée automatiquement au débit de granulat respectif.

6. Dispositif pour le séchage de granulat, comportant un récipient de séchage (14) qui est traversé par un fluide de séchage gazeux, et dans lequel on peut fermer des entrées et des sorties du fluide de séchage sur le récipient de séchage (14) au moyen de vannes d'arrêt (24, 26), et comportant une unité de commande (44) qui commande par intervalles le débit du fluide de séchage à travers le récipient de séchage (14), par le fait que les vannes d'arrêt (24, 26) sont périodiquement ouvertes et fermées, **caractérisé en ce que** le dispositif de commande (44), commande le débit du fluide de séchage en mode avec intervalles, pendant que le granulat est extrait en continu du récipient de séchage avec un débit (P) déterminé.

7. Dispositif selon la revendication 6, **caractérisé en ce que** le dispositif de commande (44) est conçu pour régler, en fonction du débit de granulat (P), la durée relative (T) des intervalles au cours desquels le fluide de séchage circule à travers le récipient de séchage, rapportée à la durée de période (D).

8. Dispositif selon la revendication 6 ou 7, **caractérisé en ce qu'**une arrivée de granulat (40) sur le récipient de séchage (14) peut être fermée sensiblement de manière étanche à l'air à l'aide d'un tiroir d'arrêt (42).

*Fig. 1*

**Fig. 2**

Parameter V, γ, t initialisieren — *101*

Anlaufphase abwarten — *102*

Granulatdurchsatz P ermitteln — *103*

berechne Intervalldauer
$T = P\, t\, /\, V\, \gamma$ — *104*

Intervallbetrieb mit
Intervalldauer T einschalten — *105*

**Fig. 3**

Trocknung ein

Trocknung aus

*48*  *50*  *50*  *52*  *54*  *56*  *56*

D   T1   T2   Zeit